# EUROPEAN PATENT APPLICATION

(11) **EP 4 650 622 A1**
(43) Date of publication of application: **19.11.2025**
(21) Application number: 24199922.6
(22) Date of filing: 12.09.2024
(51) Int. Cl.: F16F 13/16, F16F 13/14, F16F 13/08, B61F 5/30, F16F 1/41

(54) **LONGITUDINAL VARIABLE STIFFNESS LIQUID RUBBER COMPOSITE CONICAL SPRING, LIQUID FILLING METHOD, PRIMARY SPRING AND RAILWAY VEHICLE**

(30) Priority: 17.05.2024 CN 202410613892
(71) Applicant: Zhuzhou Times Ruiwei Anti-Viberation Equipment Limited, Zhuz Hunan 412007 (CN)
(72) Inventor: Luo, Jun, Zhuzhou, 412007 (CN); Cheng, Haitao, Zhuzhou, 412007 (CN); Chen, Junhui, Zhuzhou, 412007 (CN); Lin, Sheng, Zhuzhou, 412007 (CN); Tang, Yunlun, Zhuzhou, 412007 (CN); Li, Jing, Zhuzhou, 412007 (CN); Zhang, Yuxiang, Zhuzhou, 412007 (CN); Chen, Canhui, Zhuzhou, 412007 (CN); Zuo, Binhuai, Zhuzhou, 412007 (CN); Zhou, Juan, Zhuzhou, 412007 (CN); Wang, Yeqing, Zhuzhou, 412007 (CN)
(74) Representative: Zhu, Junyi

(57) **Abstract**

A longitudinal variable stiffness liquid rubber composite conical spring, comprising a mandrel and a first bushing arranged coaxially; a conical rubber body is vulcanized and connected between the mandrel and the first bushing, at least one pair of hollow hydraulic cavities are provided in the rubber body, the hydraulic cavities are distributed symmetrically about and longitudinally along the mandrel, a liquid flow channel is communicated between the opposite hydraulic cavities, and at least one hydraulic cavity is communicated with a filling port which is communicated externally; when the liquid rubber composite conical spring is subjected to a longitudinal load, the hydraulic cavities will be compressed to allow a liquid therein to flow through the liquid flow channel and change the longitudinal stiffness of the liquid rubber composite conical spring. So when subjected to a longitudinal load, the conical spring proposed by the present invention has a low longitudinal static stiffness at a low-frequency load and has a high static stiffness at a high-frequency load, so that a high ratio of dynamic stiffness to static stiffness in a longitudinal direction is achieved, and at the same time, the influence on vertical stiffness and transverse stiffness is small under the improvement and optimization of the present invention.

## Description

### Technical Field

The present invention relates to the technical field of railway transit vehicle vibration reduction equipment, and particularly relates to a longitudinal variable stiffness liquid rubber composite conical spring and a liquid filling method.

### Background

A conical spring is a rubber elastic positioning and supporting element installed between an axle box and a bogie frame of various vehicles, which is suitable for various domestic and foreign subway and light rail vehicles, and has a high vertical compressibility and a low transverse shear stiffness. The conical spring is mainly used in a vehicle suspension system, which plays the roles of elastic positioning, vibration reduction and buffering, and can eliminate high-frequency vibration and improve vibration performance, so as to ensure the safety and comfort of a vehicle. A liquid rubber composite conical spring technology takes advantage of the incompressibility of a liquid and is coupled with a rubber vibration reduction technology. Two symmetrical cavity structures are arranged in a longitudinal direction inside the conical spring, and closed cavities are formed in combination with a jacket assembled and are used for storing the liquid; a damping flow channel structure is adopted to communicate the cavities to form a liquid flow path; a rubber cavity on one side is compressed under the action of an external longitudinal load, the volume is reduced, and the pressure is increased; a rubber cavity on the other side is stretched, the volume is increased, and the pressure is reduced; the liquid flows from the compressed cavity into the stretched cavity; in the process of rubber deformation and liquid flowing through a flow channel, an reaction force on a node is jointly composed by a viscous force and an inertia force of the liquid and a force of rubber itself. The design of different dynamic parameters is realized through the design of parameters such as structures and positions of hydraulic cavities as well as length and cross-sectional area of a damping flow channel. In actual operating conditions of the conical spring, a longitudinal (vehicle traveling direction) load comes from a load of acceleration during traveling or deceleration; therefore, when the longitudinal load is a static load or a low-frequency load, a low stiffness is needed to obtain a better vibration reduction effect, and when the longitudinal load is a high-frequency load, a high dynamic stiffness is needed to support the vehicle. At the same time, while having a high ratio of dynamic stiffness to static stiffness in a longitudinal direction, the influence on vertical (vehicle height direction) and transverse (vehicle width direction) stiffness should be as small as possible. Therefore, it is of great significance to propose a longitudinal variable stiffness liquid rubber composite conical spring and a liquid filling method in the art.

### Summary

In view of the defects of the prior art, the present invention provides a longitudinal variable stiffness liquid rubber composite conical spring, comprising a mandrel and a first bushing arranged coaxially; a conical rubber body is vulcanized and connected between the mandrel and the first bushing, at least one pair of hollow hydraulic cavities are provided in the rubber body, the hydraulic cavities are distributed symmetrically about and longitudinally along the mandrel, a liquid flow channel is communicated between the opposite hydraulic cavities, and at least one hydraulic cavity is communicated with a filling port which is communicated externally; when the liquid rubber composite conical spring is subjected to a longitudinal load, the hydraulic cavities will be compressed to allow a liquid therein to flow through the liquid flow channel and change the longitudinal stiffness of the liquid rubber composite conical spring.

Further, a second bushing is coaxially sheathed outside the first bushing, a first opening is formed in the first bushing, and the hydraulic cavities extend longitudinally from the first opening to the mandrel.

Further, hydraulic cavities extend longitudinally from the first opening to a side wall of the mandrel.

Further, the hydraulic cavities are located between the rubber body and the mandrel, and a second opening of the hydraulic cavities is adjacent to the side wall of the mandrel.

Further, the rubber body is composed of multiple layers of rubber, a number of partition plates are arranged at intervals in the rubber body, the hydraulic cavities are located in the innermost layer of the rubber body close to the mandrel, and the second opening of the hydraulic cavities is adjacent to the side wall of the mandrel.

Further, a liquid flow channel is located in the mandrel, and is communicated with the hydraulic cavities after radially penetrating through the mandrel.

Further, the liquid flow channel is a spiral flow channel surrounding the side wall of the mandrel.

Further, a spiral groove is formed in an outer side wall of the mandrel, a spiral copper pipe is wound in the spiral groove, and an annular sealing sleeve is sheathed on the outer side wall of the mandrel; cavities are formed at both ends of the spiral groove, the spiral copper pipe is connected with connecting pipes at the cavities, and the connecting pipes are communicated with the hydraulic cavities after penetrating through the annular sealing sleeve.

Further, the filling port is formed along an axial direction of the mandrel, and is communicated with the liquid flow channel penetrating through the mandrel.

Further, the filling port is formed in the first bushing, and is communicated with the hydraulic cavities from the first opening of the first bushing.

Further, a cover plate is covered on a tail end of the first bushing, a second filling channel is formed in the cover plate, and a first filling channel is formed in the first bushing to communicate the hydraulic cavities with the second filling channel; at the same time, the filling port is formed in the cover plate and is communicated with the second filling channel.

Further, a sealing stop is covered on the first opening, the first opening of the first bushing is provided with a step surface, the sealing stop is covered on the step surface, and the second bushing is in interference fit with the sealing stop and the first bushing.

Further, the rubber body is vulcanized to the surface of the step surface.

Further, an innermost partition plate is arranged on the outer side wall of the mandrel, a third opening is formed in the innermost partition plate, the second opening of the hydraulic cavities penetrates through the third opening and is adjacent to the side wall of the mandrel; a sealing ring is crimped between the innermost partition plate and the side wall of the mandrel, and the rubber body is vulcanized to an end face of the third opening.

Further, the hydraulic cavities are located in the middle of the rubber body along an axial direction, and the rubber body is evenly distributed at upper and lower ends of the hydraulic cavities.

The present invention also proposes a liquid filling method for the longitudinal variable stiffness liquid rubber composite conical spring, comprising liquid filling steps in a free state of the liquid rubber composite conical spring or liquid filling steps in a compressed state of the liquid rubber composite conical spring; the liquid filling steps in a free state include: ensuring that the liquid rubber composite conical spring is not subjected to any load in any direction, filling a liquid into the filling port to fill up the hydraulic cavities and the liquid flow channel with the liquid, and then plugging the filling port.

Further, the liquid filling steps in a compressed state include: first, applying a vertical load to the liquid rubber composite conical spring to make the rubber body in a compressed state, then filling a liquid into the filling port to fill up the hydraulic cavities and the liquid flow channel with the liquid, and releasing the vertical load after plugging the filling port.

The present invention also proposes a primary spring of a railway vehicle, comprising an axle box, a frame and the longitudinal variable stiffness liquid rubber composite conical spring, wherein the conical spring is connected between the axle box and the frame.

The present invention also proposes a railway vehicle, comprising a vehicle body and a bogie, wherein the primary spring is used by the bogie.

Compared with the prior art, the technical solution of the present application has the following beneficial effects: when subjected to a longitudinal load, the conical spring proposed by the present invention has a low longitudinal static stiffness at a low-frequency load and has a high static stiffness at a high-frequency load, so that a high ratio of dynamic stiffness to static stiffness in a longitudinal direction is achieved, and at the same time, the influence on vertical stiffness and transverse stiffness is small under the improvement and optimization of the present invention.

### Description of Drawings

Fig. 1 and Fig. 3 are schematic diagrams of arrangement of hydraulic cavities in embodiment 1;
Fig. 2 is a local amplified schematic diagram of Fig. 1;
Fig. 4 is a schematic diagram of arrangement of hydraulic cavities in embodiment 2;
Fig. 5 is a schematic diagram of arrangement of hydraulic cavities in embodiment 3;
Fig. 6 is a local amplified schematic diagram of Fig. 5;
Fig. 7 is a schematic diagram of arrangement of a liquid flow channel in embodiment 5;
Fig. 8 is a schematic diagram of arrangement of a filling port in embodiment 7;
Fig. 9 is a sectional view of a liquid rubber composite conical spring in embodiment 8;
Fig. 10 is a local amplified schematic diagram of Fig. 9;
Fig. 11 is a schematic diagram of an extended structure in embodiment 8;
Fig. 12 is a structural schematic diagram of a primary spring in the present invention;

In the figures: 1. mandrel, 11. sealing sleeve, 12. connecting pipe, 13. cavity, 14. spiral groove, 2. rubber body, 3. first bushing, 31. first opening, 32. step surface, 4. sealing stop, 5. second bushing, 6. hydraulic cavity, 61. second opening, 7. liquid flow channel, 71. spiral flow channel, 72. spiral copper pipe, 8. filling port, 81. first filling channel, 9. partition plate, 91. sealing ring, 92. third opening, 10. cover plate, 101. second filling channel, 400. axle box, 500. frame.

### Detailed Description

The technical solution in the embodiments of the present invention will be clearly and fully described below in combination with the drawings in the embodiments of the present invention. Apparently, the described embodiments are merely part of the embodiments of the present invention, not all of the embodiments. Based on the embodiments in the present invention, all other embodiments obtained by those ordinary skilled in the art without contributing creative labor will belong to the protection scope of the present invention.

A longitudinal variable stiffness liquid rubber composite conical spring comprises a mandrel 1 and a first bushing 3 arranged coaxially; a conical rubber body 2 is vulcanized and connected between the mandrel 1 and the first bushing 3, at least one pair of hollow hydraulic cavities 6 are provided in the rubber body 2, the hydraulic cavities 6 are distributed symmetrically about and longitudinally along the mandrel 1, a liquid flow channel 7 is communicated between the opposite hydraulic cavities 6, and at least one hydraulic cavity 6 is communicated with a filling port 8 which is communicated externally; when the liquid rubber composite conical spring is subjected to a longitudinal load, the hydraulic cavities 6 will be compressed to allow a liquid therein to flow through the liquid flow channel 7 and change the longitudinal stiffness of the liquid rubber composite conical spring.

The above constitutes a basic technical solution of the present invention. In specific embodiments, the hydraulic cavities 6 are described in detail by a pair of symmetrically distributed hydraulic cavities 6. However, it should be noted that multiple pairs of hydraulic cavities 6 may be used, and opposite hydraulic cavities 6 should be communicated through the liquid flow channel 7, so as to enable the liquid in the hydraulic cavities 6 to flow and exchange when subjected to the longitudinal load and achieve a variable stiffness. When the conical spring is subjected to the longitudinal load, the volume of the hydraulic cavity 6 on one side under a compression load will be reduced due to the compression of the rubber body 2, while the volume of the hydraulic cavity 6 on the other side is increased due to the stretching of the rubber body 2, thus achieving the variable stiffness in a longitudinal direction. When the longitudinal load is a high-frequency load, as the liquid in the hydraulic cavities 6 has no time to flow and is incompressible, the dynamic stiffness in the longitudinal direction is high. When the conical spring is subjected to a vertical load or a transverse load, as the hydraulic cavities 6 are distributed in the longitudinal direction, the rubber body 2 mainly has a shear deformation in the longitudinal direction, and the compression deformation is small, the influence on vertical and transverse stiffness is small. The present invention is described below through different embodiments, respectively.

Among which, embodiments 1 to 3 are embodiments in which different hydraulic cavities 6 are arranged, embodiments 4 to 5 are embodiments in which different liquid flow channels 7 are arranged, and embodiments 6 to 7 are embodiments in which different filling ports 8 are arranged.

### Embodiment 1

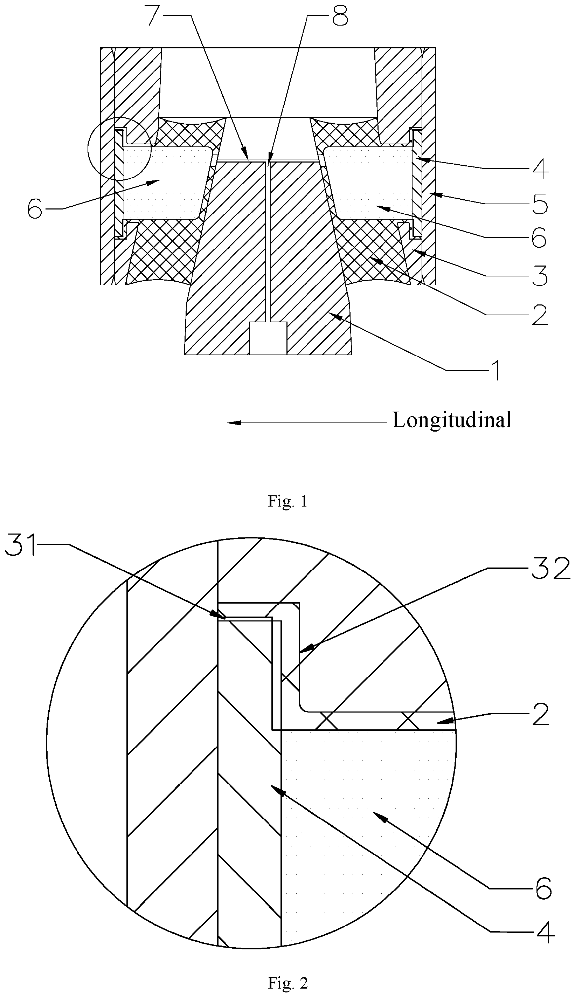

As shown in Fig. 1, a first opening 31 is formed in the first bushing 3 of the present embodiment, and the hydraulic cavities 6 extend longitudinally from the first opening 31 to the mandrel 1. A starting end of the hydraulic cavities 6 has been connected with the first opening 31 of the first bushing 3, so the volumes of the hydraulic cavities 6 depend partly on an extension length thereof towards the mandrel 1, i.e., the closer the hydraulic cavities 6 are to the mandrel 1, the larger the volumes of the hydraulic cavities 6 are, the more the liquid can be accommodated, and the lower the static longitudinal stiffness of the conical spring is. However, because liquid flow is difficult to adapt to the high-frequency load, the dynamic longitudinal stiffness is still high.

In the present embodiment, the rubber body 2 is composed of a single layer of rubber, a second bushing 5 is coaxially sheathed outside the first bushing 3, and the hydraulic cavities 6 extend longitudinally from the first opening 31 to the mandrel 1 (which can even extend to a side wall of the mandrel 1). In the present embodiment, the hydraulic cavities 6 will have a large volume, one end of the hydraulic cavities 6 opposite to the first opening 31 is close to the side wall of the mandrel 1, and a thin rubber body is still vulcanized between the side wall of the mandrel 1 and a tail end of the hydraulic cavities 6, so the longitudinal static stiffness is relatively low.

As shown in Fig. 2, in the present embodiment, a sealing stop 4 is covered on the first opening 31, the first opening 31 of the first bushing 3 is provided with a step surface 32, the sealing stop 4 is covered on the step surface 32, and the second bushing 5 is in interference fit with the sealing stop 4 and the first bushing 3 to form primary seal for the hydraulic cavities 6.

Preferably, the rubber body 2 is vulcanized to the surface of the step surface 32, secondary seal is formed between the rubber body 2 and the step surface 32 as well as the sealing stop 4, and a certain pressure is produced on the sealing stop 4 by the interference fit between the second bushing 5 and the sealing stop 4, so that the sealing stop 4 is pressed tightly against the rubber body 2 on the surface of the step surface 32, and the sealing stop 4 and the rubber body 2 work together to produce a better sealing effect.

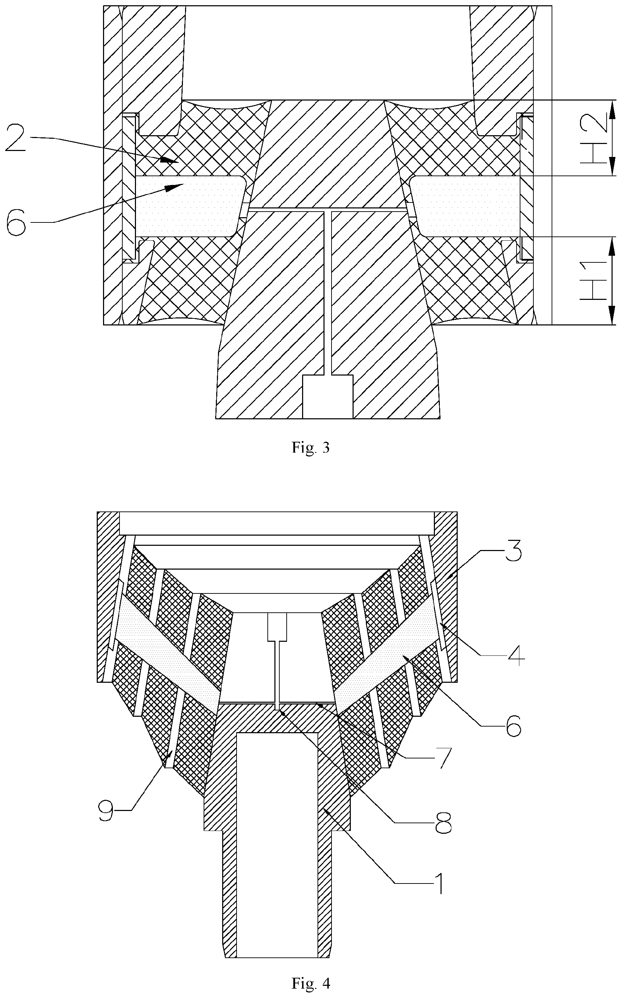

Preferably, as shown in Fig. 3, the hydraulic cavities 6 are located in the middle of the rubber body 2, and the rubber body 2 is evenly distributed at upper and lower sides of the hydraulic cavities 6. A height H2 of an upper edge of the hydraulic cavities 6 from the rubber body 2 and a height H1 of a lower edge from the rubber body 2 are approximately equal. According to a test, and compared with non-uniformly distributed hydraulic cavities 6, a ratio of dynamic stiffness to static stiffness in a longitudinal direction of a product of the present embodiment is increased.

### Embodiment 2

As shown in Fig. 4, the present embodiment is a similar improvement proposed for a multilayer rubber conical spring based on embodiment 1, a first opening 31 is formed in the first bushing 3, and the hydraulic cavities 6 extend longitudinally from the first opening 31 to the mandrel 1. The rubber body 2 is composed of multiple layers of rubber, a number of partition plates 9 are arranged at intervals in the rubber body 2, the rubber body 2 is vulcanized and connected among the partition plates 9, and the hydraulic cavities 6 extend longitudinally from the first opening 31 to a side wall of the mandrel 1. A conical spring with a three-layer rubber body 2 is taken as an example in the present embodiment, and it is apparently the same in the case of more than three layers. The hydraulic cavities 6 extend from first opening 31 to the side wall of the mandrel 1, which almost penetrate through the entire multilayer rubber body 2.

### Embodiment 3

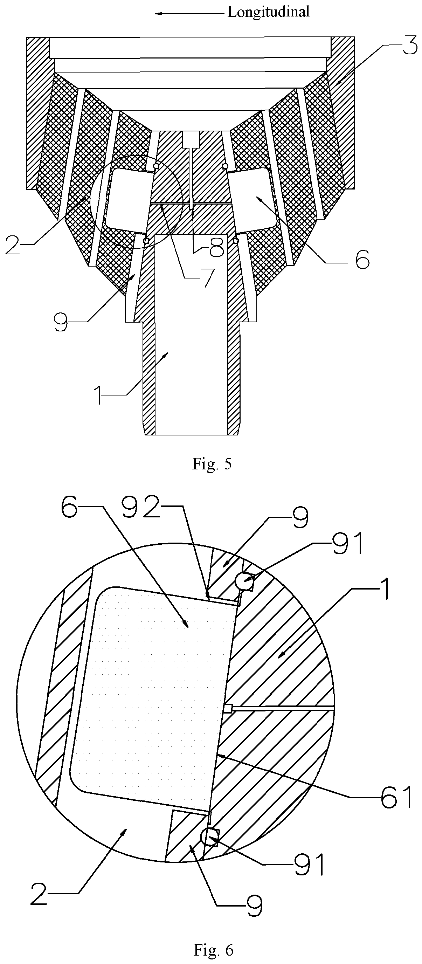

As shown in Fig. 5 and Fig. 6, the hydraulic cavities 6 of the present embodiment is arranged differently from the hydraulic cavities 6 of the above embodiments, no opening is formed in the first bushing 3 any more, the hydraulic cavities 6 are located inside the rubber body 2, and a second opening 61 of the hydraulic cavities 6 is adjacent to the side wall of the mandrel 1. The second opening 61 is used as an initial end for the extension of the hydraulic cavities 6; as the second opening 61 is adjacent to the side wall of the mandrel 1, the hydraulic cavities 6 can be partly sealed by the side wall of the mandrel 1. In such structure, an outer side wall of the mandrel 1 is provided with the partition plates 9, a third opening 92 is formed in one partition plate 9, and the second opening 61 of the hydraulic cavities 6 penetrates through the third opening 92 and is adjacent to the side wall of the mandrel 1. At the same time, a sealing ring 91 is crimped between the partition plate 9 and the side wall of the mandrel 1, and the mandrel 1 is installed in the partition board 9 by press mounting after the rubber body 2 is vulcanized to the partition plate 9. Primary seal is formed by interference contact during the press mounting between the partition plate 9 and the mandrel 1, and secondary seal is formed by the sealing ring 91.

Preferably, the rubber body 2 is composed of multiple layers of rubber, a number of partition plates 9 are arranged at intervals in the rubber body 2, the hydraulic cavities 6 are located in the innermost layer of the rubber body 2 close to the mandrel 1, and the second opening 61 of the hydraulic cavities 6 is adjacent to the side wall of the mandrel 1.

### Embodiment 4

The present embodiment describes an arrangement mode of the liquid flow channel 7. As shown in Fig. 1 and Fig. 3-Fig. 5, the liquid flow channel 7 is arranged in the mandrel 1, i.e., the liquid flow channel 7 is a structure which penetrates through the mandrel 1 to communicate the hydraulic cavities 6, and such structure may be adopted in the above embodiments 1 to 3.

### Embodiment 5

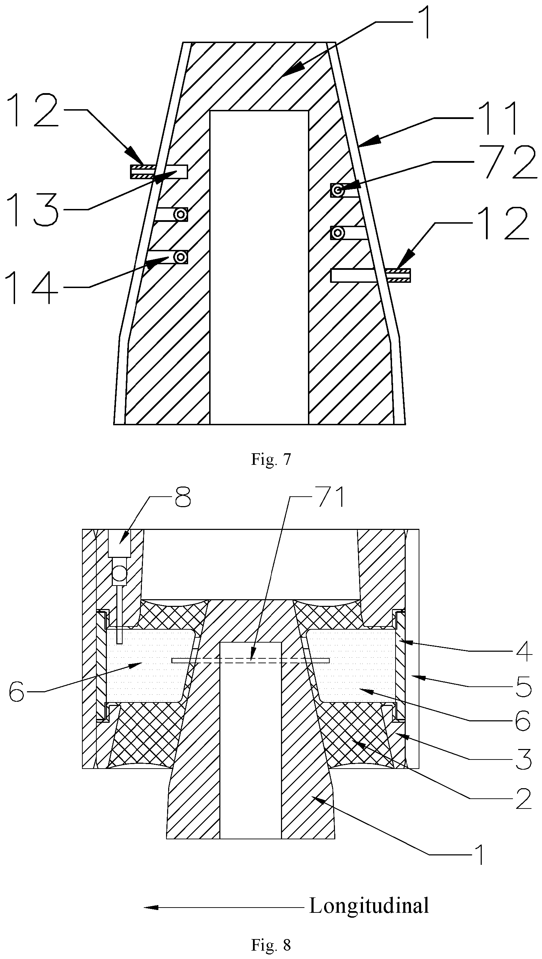

As shown in Fig. 7, the liquid flow channel 7 of the present embodiment is not a straight flow channel, but a spiral flow channel 71 surrounding the side wall of the mandrel 1; first, a spiral groove 14 is formed in the outer side wall of the mandrel 1, a spiral copper pipe 72 is wound in the spiral groove 14, and then an annular sealing sleeve 11 is sheathed on the outer side wall of the mandrel 1 to position the spiral copper pipe 72 in the spiral groove 14. Cavities 13 are formed at both ends of the spiral groove 14, connecting pipes 12 are connected at the cavities 13, and the connecting pipes 12 are communicated with the hydraulic cavities 6 after penetrating through the annular sealing sleeve 11. In the present embodiment, the spiral copper pipe 72 approaches the tail end of the hydraulic cavities 6 and terminates, two tail ends of the spiral copper pipe 72 are communicated with one cavity 13, respectively, and the cavities 13 are communicated with the hydraulic cavities 6 through the connecting pipes 12 penetrating through the annular sealing sleeve 11. Compared with a spiral copper pipe 72 with tail ends directly bent to enter the hydraulic cavities 6 from the cavities 13, the spiral copper pipe 72 of the present embodiment is only spiral, and is not bent significantly, which avoids a fracture of the spiral copper pipe 72 due to an excessive bending amplitude. In addition, the spiral flow channel 71 has a longer distance than a straight flow channel, and the damping effect of the liquid is better, so the dynamic stiffness and the static stiffness are higher than those of the straight flow channel.

Such arrangement mode of liquid flow channel 7 may be adopted in both embodiments 1 and 2. However, for embodiment 3, as the rubber body 2 is vulcanized onto the partition plate 9, the mandrel 1 needs to be installed in the innermost partition plate 9 by press mounting; whereas the connecting pipes 12 in the present embodiment needs to penetrate through the sealing sleeve 11, when the mandrel 1 and the sealing sleeve 11 are installed in the partition plate 9 by press mounting as a whole, interference is possible to occur, which is inconvenient to use.

### Embodiment 6

The present embodiment describes an arrangement mode of the filling port 8. As shown in Fig. 1 and Fig. 3-Fig. 5, the filling port 8 is formed along an axial direction of the mandrel 1, and the liquid flow channel 7 is located in the mandrel 1 and communicated with the hydraulic cavities 6 after penetrating through the mandrel 1. In the present embodiment, neither the filling port 8 nor the liquid flow channel 7 penetrates through the rubber body 2 significantly, and therefore has almost no influence on the fatigue performance of the rubber body 2.

When the structure of the liquid flow channel 7 in embodiment 4 is adopted, the arrangement mode of the filling port 8 in the present embodiment can be adopted, but the spiral flow channel 71 in embodiment 5 is not suitable for the structure of the filling port 8 in the present embodiment.

### Embodiment 7

As shown in Fig. 8, the filling port 8 of the present embodiment is formed in the first bushing 3, the filling port 8 is communicated with the hydraulic cavities 6 from an end of the first bushing 3, and the liquid flow channel 7 is located in the mandrel 1 and communicated with the hydraulic cavities 6 after penetrating through the mandrel 1. As the opening of the hydraulic cavities 6 has been connected with the first opening 31, it is still feasible to form the filling port 8 in the first bushing 3, but a liquid filling distance is theoretically longer than that in embodiment 6.

### Embodiment 8

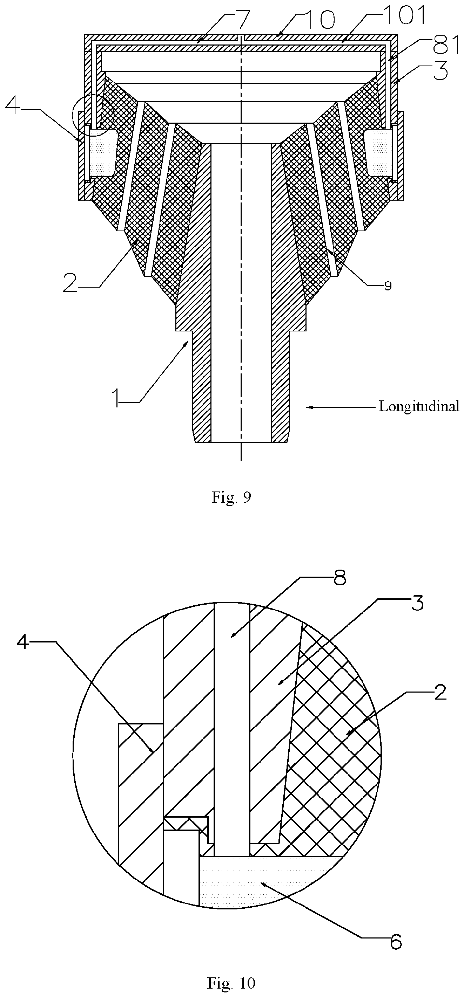

The structure of the hydraulic cavities 6 of the present embodiment is an improvement based on embodiment 2. As shown in Fig. 9 and Fig. 10, a number of partition plates 9 are arranged in the rubber body 2 of the present embodiment to form multiple layers of rubber, and the hydraulic cavities 6 extend longitudinally from the first opening 31 to the outermost partition plate 9, so the extension length of the hydraulic cavities 6 in the present embodiment is smaller than that in embodiment 2, and the longitudinal static stiffness is higher.

As the hydraulic cavities 6 in the present embodiment is not close to the mandrel 1, neither a straight flow channel nor an annular flow channel is suitable. Therefore, a cover plate 10 is covered on a tail end of the first bushing 3, a second filling channel 101 is formed in the cover plate 10, and a first filling channel 81 is formed in the first bushing 3 to communicate the hydraulic cavities 6 with the second filling channel 101. At the same time, the filling port 8 is formed in the cover plate 10 and is communicated with the second filling channel 101; when liquid filling is completed, an end of the filling port 8 communicated externally is sealed, and the first filling channel 81 is matched with the second filling channel 101, which can be used as the liquid flow channel 7 between the hydraulic cavities 6.

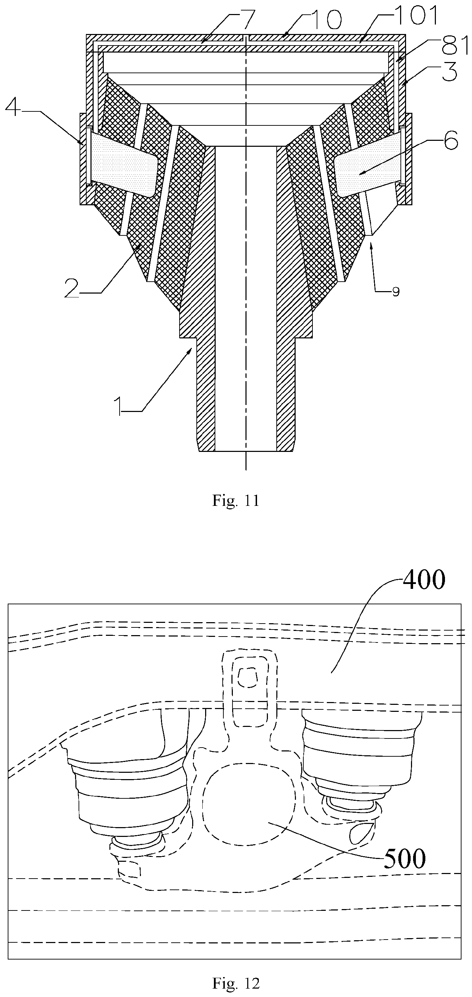

Of course, as shown in Fig. 11, the structure of the hydraulic cavities 6 of the present embodiment can be further extended. For example, when multiple partition plates 9 are provided in the rubber body 2, the hydraulic cavities 6 can penetrate through the outermost partition plate 9, or through the outermost two partition plates 9, and so on, which can be selected according to different stiffness requirements.

In addition, in view of the above embodiments, the present invention also proposes a liquid filling method, comprising liquid filling steps in a free state of the liquid rubber composite conical spring or liquid filling steps in a compressed state of the liquid rubber composite conical spring; the liquid filling steps in a free state include: ensuring that the liquid rubber composite conical spring is not subjected to any load in any direction, filling a liquid into the filling port 8 to fill up the hydraulic cavities 6 and the liquid flow channel 7 with the liquid, and then plugging the filling port 8.

The liquid filling steps in a compressed state include: first, applying a vertical load to the liquid rubber composite conical spring to make the rubber body 2 in a compressed state, then filling a liquid into the filling port 8 to fill up the hydraulic cavities 6 and the liquid flow channel 7 with the liquid, and releasing the vertical load after plugging the filling port 8.

In the above different liquid filling modes, the vertical, transverse and longitudinal static stiffness, dynamic stiffness, liquid filling amount and dynamic stiffness characteristics of the product are influenced. Longitudinal static stiffness: the static longitudinal stiffnesses of a liquid-filled product and a liquid-free product in different states are basically the same, and no obvious nonlinear characteristics is provided.

Longitudinal dynamic stiffness: the fluid-filled product has obvious variable stiffness characteristics, and the dynamic stiffness of the liquid-free product is basically constant; in the two liquid filling modes, stability frequencies of the dynamic stiffnesses at an amplitude ±0.5 mm are basically the same, which are about 4 Hz; the cavity volume and liquid filling amount of the liquid-filled product in an AW0 state are reduced, and the dynamic stiffness is lower than that of the liquid-filled product in a free state; when the amplitude is ±0.5 mm and the frequency is ≥4 Hz, the ratio of dynamic stiffness to static stiffness in a longitudinal direction of the liquid composite conical spring is >3.

As shown in Fig. 12, the present invention also proposes a primary spring of a railway vehicle, comprising an axle box 400, a frame 500 and the longitudinal variable stiffness liquid rubber composite conical spring, wherein the conical spring is connected between the axle box 400 and the frame 500, and the conical spring is shown by solid lines in the figure.

It should be noted that herein, relationship terms of first, second and the like herein are just used for differentiating one entity or operation from the other entity or operation, and do not necessarily require or imply any practical relationship or sequence between the entities or operations. Moreover, terms of "comprise", "include" or any other variant are intended to cover non-exclusive inclusion, so that a process, a method, an article or a device which includes a series of elements not only includes such elements, but also includes other elements not listed clearly or also includes inherent elements in the process, the method, the article or the device. Under the condition of no more limitation, the elements defined by a sentence "include one..." do not exclude additional identical elements in the process, the method, the article or the terminal device which includes the elements.

Although the embodiments of the present invention have been shown and described, it will be appreciated that various variations, amendments, replacements and modifications can be made by those ordinary skilled in the art without departing from the principle and spirit of the present invention, and the scope of the present invention is limited by the appended claims and the equivalents thereof.

## Claims

1. A longitudinal variable stiffness liquid rubber composite conical spring, comprising a mandrel (1) and a first bushing (3) arranged coaxially; a conical rubber body (2) is vulcanized and connected between the mandrel (1) and the first bushing (3), **characterized in that**: at least one pair of hollow hydraulic cavities (6) are provided in the rubber body (2), the hydraulic cavities (6) are distributed symmetrically about and longitudinally along the mandrel (1), a liquid flow channel (7) is communicated between the opposite hydraulic cavities (6), and at least one hydraulic cavity (6) is communicated with a filling port (8) which is communicated externally; when the liquid rubber composite conical spring is subjected to a longitudinal load, the hydraulic cavities (6) will be compressed to allow a liquid therein to flow through the liquid flow channel (7) and change the longitudinal stiffness of the liquid rubber composite conical spring.

2. The longitudinal variable stiffness liquid rubber composite conical spring according to claim 1, **characterized in that**: a second bushing (5) is coaxially sheathed outside the first bushing (3), a first opening (31) is formed in the first bushing (3), and the hydraulic cavities (6) extend longitudinally from the first opening (31) to the mandrel (1).

3. The longitudinal variable stiffness liquid rubber composite conical spring according to claim 2, **characterized in that**: hydraulic cavities (6) extend longitudinally from the first opening (31) to a side wall of the mandrel (1).

4. The longitudinal variable stiffness liquid rubber composite conical spring according to claim 1, **characterized in that**: the hydraulic cavities (6) are located between the rubber body (2) and the mandrel (1), and a second opening (61) of the hydraulic cavities (6) is adjacent to the side wall of the mandrel (1).

5. The longitudinal variable stiffness liquid rubber composite conical spring according to claim 4, **characterized in that**: the rubber body (2) is composed of multiple layers of rubber, a number of partition plates (9) are arranged at intervals in the rubber body (2), the hydraulic cavities (6) are located in the innermost layer of the rubber body (2) close to the mandrel (1), and the second opening (61) of the hydraulic cavities (6) is adjacent to the side wall of the mandrel (1).

6. The longitudinal variable stiffness liquid rubber composite conical spring according to claim 2 or claim 4, **characterized in that**: a liquid flow channel (7) is located in the mandrel (1), and is communicated with the hydraulic cavities (6) after radially penetrating through the mandrel (1).

7. The longitudinal variable stiffness liquid rubber composite conical spring according to claim 2, **characterized in that**: the liquid flow channel (7) is a spiral flow channel (71) surrounding the side wall of the mandrel (1), a spiral groove (14) is formed in an outer side wall of the mandrel (1), a spiral copper pipe (72) is wound in the spiral groove (14), and an annular sealing sleeve (11) is sheathed on the outer side wall of the mandrel (1); cavities (13) are formed at both ends of the spiral groove (14), the spiral copper pipe (72) is connected with connecting pipes (12) at the cavities (13), and the connecting pipes (12) are communicated with the hydraulic cavities (6)) after penetrating through the annular sealing sleeve (11).

8. The longitudinal variable stiffness liquid rubber composite conical spring according to claim 6, **characterized in that**: the filling port (8) is formed along an axial direction of the mandrel (1), and is communicated with the liquid flow channel (7) penetrating through the mandrel (1).

9. The longitudinal variable stiffness liquid rubber composite conical spring according to claim 6 or claim 7, **characterized in that**: the filling port (8) is formed in the first bushing (3), and is communicated with the hydraulic cavities (6) from the first opening (31) of the first bushing (3).

10. The longitudinal variable stiffness liquid rubber composite conical spring according to claim 2, **characterized in that**: a cover plate (10) is covered on a tail end of the first bushing (3), a second filling channel (101) is formed in the cover plate (10), and a first filling channel (101) is formed in the first bushing (3) to communicate the hydraulic cavities (6) with the second filling channel (101); at the same time, the filling port (8) is formed in the cover plate (10) and is communicated with the second filling channel (101).

11. The longitudinal variable stiffness liquid rubber composite conical spring according to claim 2, **characterized in that**: a sealing stop (4) is covered on the first opening (31), the first opening (31) of the first bushing (3) is provided with a step surface (32), the sealing stop (4) is covered on the step surface (32), and the second bushing (5) is in interference fit with the sealing stop (4) and the first bushing (3), the rubber body (2) is vulcanized to the surface of the step surface (32).

12. The longitudinal variable stiffness liquid rubber composite conical spring according to claim 6, **characterized in that**: an innermost partition plate (9) is arranged on the outer side wall of the mandrel (1), a third opening (92) is formed in the innermost partition plate (9), the second opening (61) of the hydraulic cavities (6) penetrates through the third opening (92) and is adjacent to the side wall of the mandrel (1); a sealing ring (91) is crimped between the innermost partition plate (9) and the side wall of the mandrel (1), and the rubber body (2) is vulcanized to an end face of the third opening (92).

13. The longitudinal variable stiffness liquid rubber composite conical spring according to claim 2, **characterized in that**: the hydraulic cavities (6) are located in the middle of the rubber body (2) along an axial direction, and the rubber body (2) is evenly distributed at upper and lower ends of the hydraulic cavities (6).

14. A liquid filling method for the longitudinal variable stiffness liquid rubber composite conical spring according to claim 1,**characterized in that**: comprising liquid filling steps in a free state of the liquid rubber composite conical spring or liquid filling steps in a compressed state of the liquid rubber composite conical spring:
the liquid filling steps in a free state include: ensuring that the liquid rubber composite conical spring is not subjected to any load in any direction, filling a liquid into the filling port (8) to fill up the hydraulic cavities (6) and the liquid flow channel with the liquid, and then plugging the filling port (8);
the liquid filling steps in a compressed state include: first, applying a vertical load to the liquid rubber composite conical spring to make the rubber body (2) in a compressed state, then filling a liquid into the filling port (8) to fill up the hydraulic cavities (6) and the liquid flow channel (7) with the liquid, and releasing the vertical load after plugging the filling port (8).

15. A primary spring of a railway vehicle, comprising an axle box (400) and a frame (500) **characterized in that**: also comprising the longitudinal variable stiffness liquid rubber composite conical spring of claim 1, wherein the conical spring is connected between the axle box (400) and the frame (500).

16. A railway vehicle, comprising a vehicle body and a bogie, **characterized in that**: wherein the primary spring of claim 15 is used by the bogie.
